# EUROPEAN PATENT SPECIFICATION

(11) **EP 2 728 584 B1**
(45) Date of publication and mention of the grant of the patent: **28.03.2018**
(21) Application number: 13190444.3
(22) Date of filing: 28.10.2013
(51) Int. Cl.: G21C 15/18, G21D 1/02, G21D 1/04, G21D 3/04

(54) **Safety facility of nuclear power plant**
Sicherheitseinrichtung eines Kernkraftwerkes
Installation de sécurité d'une centrale nucléaire

(30) Priority: 31.10.2012 JP 2012239778
(43) Date of publication of application: 07.05.2014
(73) Proprietor: Hitachi-GE Nuclear Energy, Ltd., Hitachi-shi Ibaraki 317-0073 (JP)
(72) Inventor: Watanabe, Ryohei, Ibaraki, 317-0073 (JP); Ando, Koji, Ibaraki, 317-0073 (JP); Matsuura, Masayoshi, Ibaraki, 317-0073 (JP)
(74) Representative: Beetz & Partner mbB

(56) References cited:
- WO-A1-2013/158691
- CN-A- 102 255 377
- DE-B3-102011 050 744
- JP-A- 2012 021 979

## Description

### FIELD OF THE INVENTION

The present invention relates to a safety facility of a nuclear power plant, more specifically, relating to a safety facility of a nuclear power plant suitable to a case where events exceeded the expectations occur such that abigtsunami exceeding designed tsunami height, a big earthquake exceeding a design base earthquake, or a collision of an aircraft, for example.

### BACKGROUND OF THE INVENTION

Facilities for safety measure of a nuclear power plant are usually designed according to established design criteria, taking into consideration design basis accidents that are accident events which the plant design should cope with. Also, even when an event that a core may be damaged occurs beyond the design base accidents, expansion to a severe accident is prevented, or even when the event expands to a severe accident, the risk of exposure of the peripheral public to radiation caused by a nuclear power plant is made as low as possible by preparing accident management measures that relax the effect thereof.

The severe accident described above means an event largely beyond the design basis accidents, and is an event of a state in which the core cannot be cooled appropriately by the means assumed in evaluation of the safety design, which leads to a serious damage of the core. The accident management measures described above mean a deed executed utilizing a safety margin included in the existing facilities, expectable functions other than original functions assumed in the safety design, or equipment newly installed in preparation for such an event, voluntarily prepared by a reactor constructing party that constructs a nuclear power plant.

For example, in "Evaluation report on the structure of accident management at light water nuclear power plants" (Nuclear and Industrial Safety Agency of Japan in October, 2002, refer to pp. 1-15), effectiveness of accident management measures prepared by the reactor constructing party is confirmed.

On the other hand, in the accident of the Fukushima Daiichi Nuclear Power Station (IF accident), events exceeded the expectations occurred and the safety facilities and the accident management facilities in the nuclear power plant did not function, and the accident developed to a severe accident.

Learning from the above accident, "On technical knowledge of accident of the Fukushima Daiichi Nuclear Power Station of Tokyo Electric Power Company" (Nuclear and Industrial Safety Agency of Japan on March 28, 2012, refer to pp. 13-29) was publicized, and it is required to strengthen the safety facilities considering positional dispersion in addition to diversification and independence, and to prevent the loss of the safety facilities' functions caused by the events exceeded the expectations.

As shown in "On technical knowledge of accident of the Fukushima Daiichi Nuclear Power Station of Tokyo Electric Power Company", the problem was that facilities and equipment of the same kind which were important for safety simultaneously lost the function due to common reasons of the tsunami and the flood.

In this regard, it is necessary to further strengthen the safety by preventing loss of the function of the in-plant electric facilities due to the failure occurring by a common cause, strengthening an emergency AC power-source, strengthening an emergency DC power-source, preventing loss of the function of the cooling facilities due to the failure occurring by a common cause, and strengthening the water pouring function. Moreover, it is preferable to cope with events exceeded the expectations by a more efficient method and by facilities whose safety is further improved.

Safety facilities to supply nuclear power plant with cooling water and power are for example disclosed in JP2012-21979, DE102011050744, and CN 102255377 A.

The present invention has been developed in view of the points described above. The object of the present invention is to provide a safety facility of a nuclear power plant, which efficiently and effectively protects safety facilities against events exceeded the expectations.

### SUMMARY OF THE INVENTION

In order to achieve the object, a safety facility of a nuclear power plant of the present invention, as defined in claim 1, includes a hazard-resistant wall and a space surrounded by the hazard-resistant wall. The space contains at least a water pouring pump that supplies water to an inside of a reactor pressure vessel constant, and the primary containment vessel including the reactor pressure vessel; a cooler facility that cools equipment contained in the space; a generator that generates electric power required for the equipment contained in the space; and an operation panel in disaster that is used to operate equipment in emergency. According to the invention, the space further contains a movable heat-removing system including a mobile facility for alternative heat-exchanging and a power-source vehicle for the mobile facility for alternative heat-exchanging, the mobile facility for alternative heat-exchanging removing heat of cooling water in the reactor building from an outside of the reactor building, and the power-source vehicle supplying electric power to the mobile facility for alternative heat-exchanging; a portable pump that supplies cooling water to the inside of the reactor building from the outside of the reactor building; a power-source vehicle that supplies electric power to equipment in the reactor building from the outside of the reactor building; a battery that supplies operation power to a generator installed in the safety facility; and a portable temporary power-source capable of being moved to and installed at a required location. According to the invention, the space further contains an emergency water-source that supplies water to the reactor building and a communication information room provided with equipment for communicating with the outside.

Preferably, a building in the safety facility is isolated by blocking communicating sections from the outside other than the safety facility and by insulating the safety facility from an outside environment.

Preferably, the reactor building and the safety facility are separated from each other at a predetermined distance.

Preferably, the safety facility is disposed at a site above a ground level on which the reactor building is disposed.

Preferably, the safety facility is buried in the ground below the ground level on which the reactor building is disposed.

Preferably, the safety facility is disposed in the reactor building.

According to the present invention, the safety facilities can be efficiently and effectively protected against events exceeded the expectations.

### BRIEF DESCRIPTION OF THE DRAWINGS

FIG. 1 is an overall configuration and partial cutout view showing a safety facility of a nuclear power plant in accordance with the first embodiment of the present invention;
FIG. 2 is a plan view of a cross-section of the safety facility of FIG. 1;
FIG. 3 is a schematic configuration view showing a safety facility of a nuclear power plant in accordance with the second embodiment of the present invention;
FIG. 4 is a schematic configuration view showing a safety facility of a nuclear power plant in accordance with the third embodiment of the present invention;
FIG. 5 is a schematic configuration view showing a safety facility of a nuclear power plant in accordance with the fourth embodiment of the present invention;
FIG. 6 is a schematic configuration view showing a safety facility of a nuclear power plant in accordance with the fifth embodiment of the present invention; and
FIG. 7 is a schematic configuration view showing a safety facility of a nuclear power plant in accordance with the sixth embodiment of the present invention.

### DETAILED DESCRIPTION OF THE PREFERRED EMBODIMENTS

Facilities for safety measure of a nuclear power plant according to the embodiments of the present invention will be described with reference to the drawings. The same reference characters will be used to denote the same constitutional components through the embodiments.

### First Embodiment

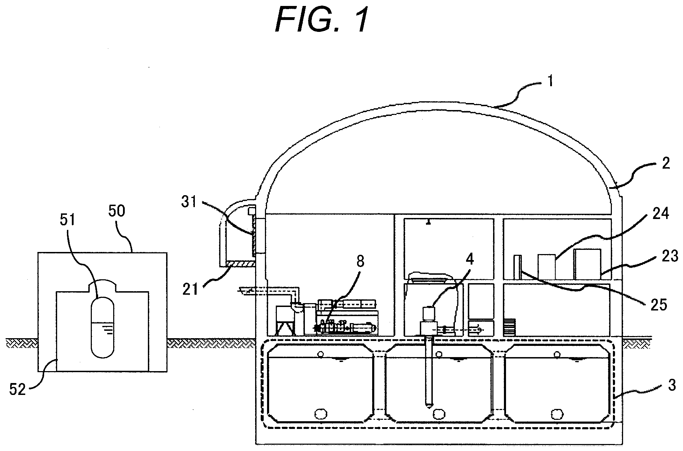

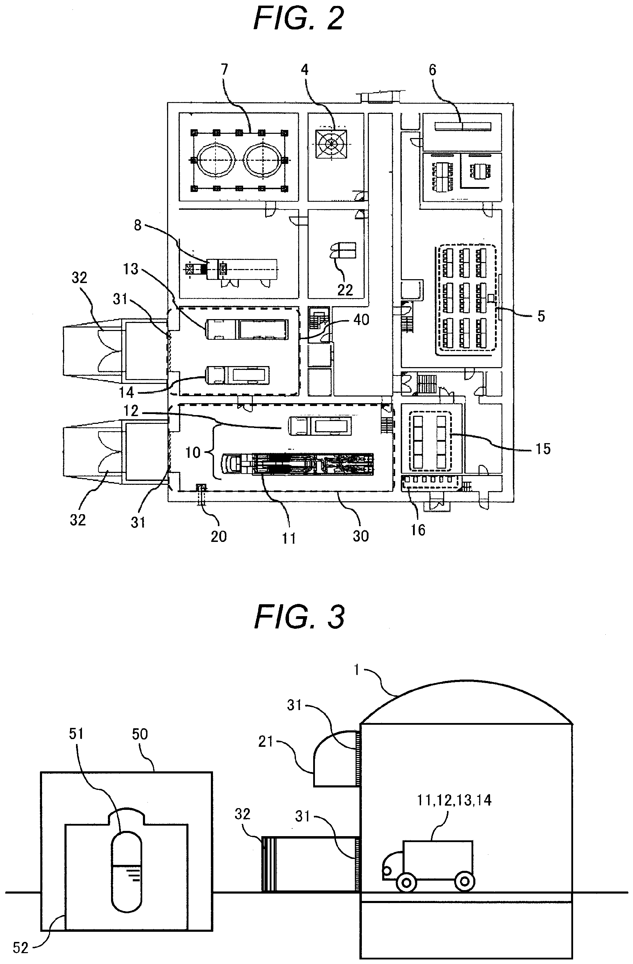

In FIG. 1 and FIG. 2, a safety facility of a nuclear power plant in accordance with the first embodiment of the present invention is shown.

As shown in FIG. 1 and FIG. 2, the safety facility of a nuclear power plant of the present embodiment, the whole structure of the facility being shown by the reference character 1, includes a covering shield (hereinafter referred to as a "hazard-resistant wall 2") and a space surrounded by the hazard-resistant wall. The hazard-resistant wall is installed for withstanding the external events to ensure the internal soundness and for preventing events occurred in the inside from expanding to the outside. The space contains, as the main facilities, a water pouring pump 4, an operation panel in disaster 6, a cooler facility 7, and a generator 8. The water pouring pump 4 supplies water to a reactor building 50, which is made of concrete and includes a reactor pressure vessel 51 made of steel containing the reactor core and maintaining the internal pressure constant and a primary containment vessel 52 containing the reactor pressure vessel 51, and is used eventually for cooling the reactor pressure vessel 51. The operation panel in disaster 6 is used to operate the facility for leading the reactor from a hot shutdown condition after a reactor scram to a cold shutdown condition. The cooler facility 7 cools the equipment contained in the space. The generator 8 generates electric power required for operation of the equipment contained in the space.

Water can be supplied to the reactor building 50 even when events exceeded the expectations occur because the water pouring pump 4 is contained in the space surrounded by the hazard-resistant wall 2, which is installed for withstanding the external events to ensure the internal soundness and for preventing events occurred in the inside from expanding to the outside.

The cooler facility 7 circulates the air through an air inlet/outlet port 21. A shutter 31 is disposed on the surface of the air inlet/outlet port 21 in contact with the hazard-resistant wall 2. The output from the generator 8 is supplied to a metal-clad type switchgear 23 through a control panel 22. The metal-clad type switchgear 23 is connected to a power center 24 used for in-plant low voltage circuits in addition to in-plant loads, and supplies required electric power . The power center 24 is connected to a motor control center 25 used for in-plant low voltage circuits of the small capacity in addition to in-plant loads, and supplies required electric power.

Further, in preparation for such an emergency situation that cooling of the reactor auxiliary equipment is impossible, portable equipment of the safety facility 1 is contained in the space surrounded by the hazard-resistant wall 2. The portable equipment includes a movable heat-removing system 10, a portable pump 13, a power-source vehicle 14, a battery 15, and a portable temporary power-source 16. The movable heat-removing system 10 includes a mobile facility for alternative heat-exchanging 11 for removing heat by passing cooling water to the inside of the reactor building 50 from the outside of the reactor building 50, and a power-source vehicle 12 for the mobile facility for alternative heat-exchanging for supplying the required electric power to the mobile facility for alternative heat-exchanging 11. The portable pump 13 supplies the cooling water to the inside of the reactor pressure vessel 51 from the outside of the reactor building 50. The power-source vehicle 14 connects cables (not illustrated in FIG. 1 and FIG. 2) mounted on equipment in the reactor building 50, such as the metal-clad type switchgear 23 and the motor control center 25, and supplies electric power to the equipment from the outside of the reactor building 50. The battery 15 supplies the operation power to the generator 8 disposed in the safety facility 1. The portable temporary power-source 16 is capable of being moved to and installed at a location where a DC power-source is required, such as a central control room.

As described above, the safety facility 1 can be used as a substitution to permanent facilities by arranging the portable facilities, and adaptability of the countermeasures against events exceeded the expectations improves.

A shutter 31 and an outside access door 32 having the width allowing the movable heat-removing system 10 to go out are disposed at the wall in contact with the outside of a space 30. Another shutter 31 and outside access door 32 having the width allowing the portable pump 13 and the power-source vehicle 14 to go out are also disposed at the wall in contact with the outside of a space 40.

Further, an emergency water-source 3 that is a water source for pouring water to the reactor building 50 is contained in the space surrounded by the hazard-resistant wall 2. The emergency water-source 3 is connected to a water supply port 20 arranged the outside of the hazard-resistant wall 2. Thus, even when the water in the emergency water-source 3 is exhausted, water can be supplied by connecting a hose to the water supply port 20 from the outside. Arrangement of the emergency water-source 3 also leads to securing of the water source, which increases reliability of the countermeasures against events exceeded the expectations.

Further, a communication information room 5 having a space where operators can stay and information equipment capable of transmitting/receiving information, such as communication with the outside, are contained in the space surrounded by the hazard-resistant wall 2. Arrangement of the communication information room 5 leads to securing of means for communication with the outside and leads to smooth execution of the countermeasures against events exceeded the expectations.

With the configuration of the safety facilities contained in the space surrounded by the hazard-resistant wall 2 in the present embodiment, the strengthened measures, such as diversification, independence and positional dispersion, can be simultaneously executed for the safety facilities contained in the space, which allows efficient protection against events exceeded the expectations.

### Second Embodiment

In FIG. 3, a safety facility of a nuclear power plant in accordance with the second embodiment of the present invention is shown.

Normally, equipment, such as the air inlet/outlet port ventilating the inside of the reactor building 50, access passages from other buildings such as a turbine building and a control building, and piping, communicate with the reactor building 50, which is made of concrete and includes the reactor pressure vessel 51 made of steel containing the reactor core and maintaining the internal pressure constant and the primary containment vessel 52 containing the reactor pressure vessel 51. These communication sections, which are facilities required for operating the nuclear power plant, can be a cause transferring the environmental state of the outside other than the reactor building 50 to the inside of the reactor building 50.

Therefore, in the present embodiment, the communication sections from the outside other than the safety facility 1 were eliminated from the safety facility 1, which includes the hazard-resistant wall 2 and the space surrounded by the hazard-resistant wall 2 and containing the safety facilities, so that the environmental state of the outside is not transferred to the inside of the safety facility 1, and thereby the building is isolated. When the communication section is to be installed, communication with the outside is blocked. In other words, as shown in FIG. 3, at the time when the nuclear power plant is operated or stopped, the positions that normally communicate with the outside are blocked and the inside of the safety facility 1 is isolated from the environmental state of the outside by entirely closing the shutter 31 attached to the face of the air inlet/outlet port 21 in contact with the hazard-resistant wall 2, the shutters 31 attached to the walls in contact with the outside of the space 30 and the space 40, and the outside access door 32. The shutters 31 and the outside access door 32 are to be opened only in emergency situations such as when a severe accident occurs.

As in the present embodiment, elimination of the communication sections of the normal times and isolation of the building improve the safety margin of the safety facility 1 against events exceeded the expectations and effectively increase protection performance of the safety facilities inside.

### Third Embodiment

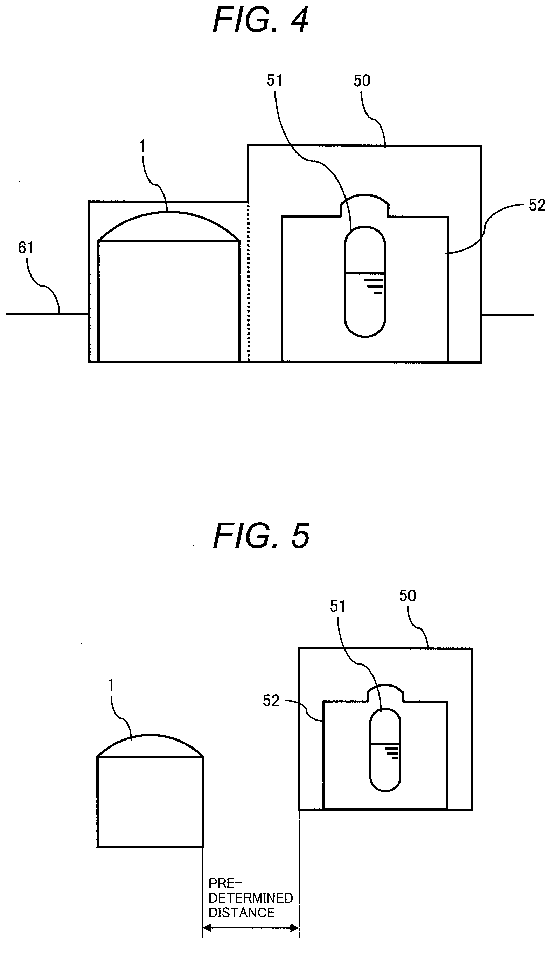

In FIG. 4, a safety facility of a nuclear power plant in accordance with the third embodiment of the present invention is shown.

Description of configuration of a safety facility 1 of the present embodiment and the safety facilities contained in the facility will be omitted because the facility and the safety facilities are similar to those of the first embodiment shown in FIG. 1 and FIG. 2 and the method for operating the safety facility 1 is similar to that in the second embodiment shown in FIG. 3.

In the third embodiment shown in FIG. 4, the safety facility 1 including the hazard-resistant wall 2 and containing the safety facilities is disposed in the reactor building 50, which is made of concrete and includes the reactor pressure vessel 51 made of steel containing the reactor core and maintaining the internal pressure constant and the primary containment vessel 52 containing the reactor pressure vessel 51.

Such a configuration of the present embodiment allows quick access to the safety facility 1 even when events exceeded the expectations occur, and has an advantage that the safety facilities contained in the safety facility 1 can be utilized and quick reaction for conclusion of the accident can be achieved.

### Fourth Embodiment

In FIG. 5, a safety facility of a nuclear power plant in accordance with the fourth embodiment of the present invention is shown.

If a case is considered where an intentional crash of an aircraft occurs as an example of events exceeded the design basis accidents, which is considered to cause a wide-range damage, such a possibility can be assumed that at least one safety function is lost because of fire after the crash in addition to simultaneous loss of one or more safety functions.

Therefore, in this embodiment shown in FIG. 5, the safety facility 1 including the hazard-resistant wall 2 and containing the safety facilities is disposed apart at a predetermined distance from the reactor building 50, which is made of concrete and includes the reactor pressure vessel 51 made of steel containing the reactor core and maintaining the internal pressure constant and the primary containment vessel 52 containing the reactor pressure vessel 51.

Such a configuration of the present embodiment allows positional dispersion of the safety facility 1 and the reactor building 50, and has an advantage that the safety facilities contained in the safety facility 1 can be protected without being damaged even when an aircraft crashes into the reactor building 50.

### Fifth Embodiment

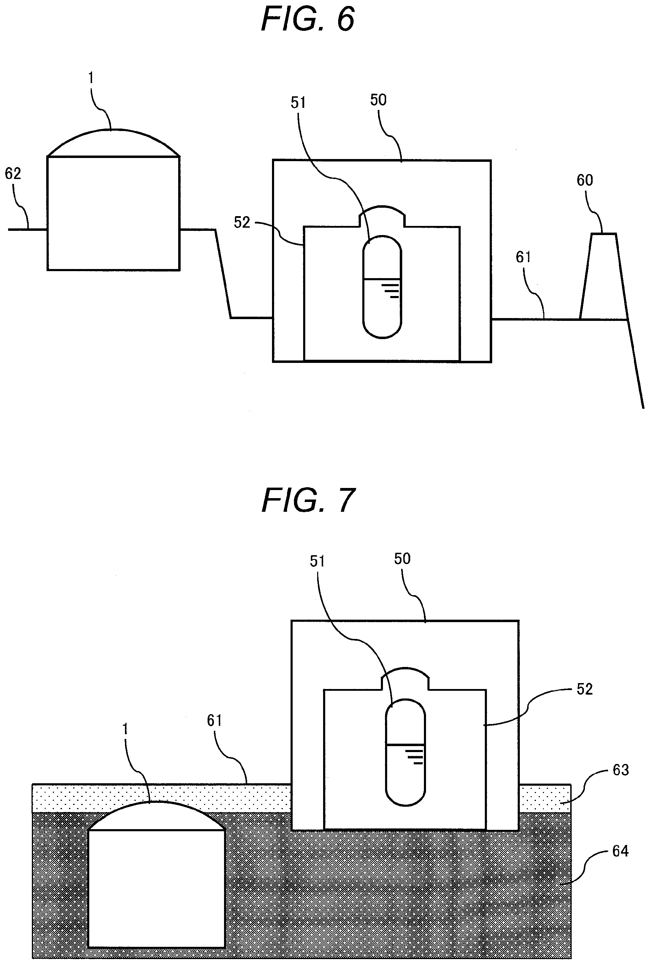

In FIG. 6, a safety facility of a nuclear power plant in accordance with the fifth embodiment of the present invention is shown.

As shown in FIG. 6, the reactor building 50, which is made of concrete and includes the reactor pressure vessel 51 made of steel containing the reactor core and maintaining the internal pressure constant and the primary containment vessel 52 containing the reactor pressure vessel 51, is normally protected from an assumed tsunami by a breakwater 60 disposed at the boundary of the sea and the site, considering the assumed arrival height of a tsunami.

In the fifth embodiment shown in FIG. 6, the safety facility 1 including the hazard-resistant wall 2 and containing the safety facilities described above is disposed at a site 62 with the elevation higher than the ground level 61 on which the reactor building 50 is disposed.

Such a configuration of the present embodiment has an advantage that the safety facility 1 can be protected even when a big tsunami exceeded the expectations, such as reaching the ground level 61, and a deluge caused by heavy rainfall occur.

### Sixth Embodiment

In FIG. 7, a safety facility of a nuclear power plant in accordance with the sixth embodiment of the present invention is shown.

In the present embodiment, as shown in FIG. 7, the reactor building 50, which is made of concrete and includes the reactor pressure vessel 51 made of steel containing the reactor core and maintaining the internal pressure constant and the primary containment vessel 52 containing the reactor pressure vessel 51, is built on the rock bed 64 having a sufficient supporting function enough to withstand an assumed earthquake.

That is, in the present embodiment, the safety facility 1 including the hazard-resistant wall 2 and containing the safety facilities described above is entirely buried in a hole so that a part of the safety facility 1 does not come out of the hole, which is opened by excavating a soft ground 63 below the ground level 61 on which the reactor building 50 is disposed and the rock-bed 64 below the soft ground 63 and having a sufficient supporting function enough to withstand an assumed earthquake.

Such a configuration described above of the present embodiment can protect the building from collapsing by the earthquake even when an earthquake exceeded the expectations occurs. Such a configuration described above of the present embodiment can also insulate the safety facility 1 from the outside environment and protect the facility from events exceeded the expectations occurring on the ground level 61.

The present invention is not limited to the embodiments described above and various modifications are included therein. For example, the embodiments described above have been described in detail for easy understanding of the present invention, and the present invention is not necessarily limited to those having all of the configurations described. It is possible to replace a part of a configuration of an embodiment with a configuration of another embodiment, and it is also possible to add a configuration of an embodiment to a configuration of another embodiment. Furthermore, it is possible to add, delete and replace a part of the configuration of each embodiment with respect to a configuration of another embodiment.

## Claims

1. A safety facility (1) for a nuclear power plant comprising:
a hazard-resistant wall (2); and
a space surrounded by the hazard-resistant wall (2),
the space containing at least:
a water pouring pump (4) adapted to supply water to an inside of a reactor building (50) including a reactor pressure vessel (51) and a primary containment vessel (52), the reactor pressure vessel (51) storing a reactor core therein and maintaining a pressure in the reactor pressure vessel constant, and the primary containment vessel (52) including the reactor pressure vessel (51);
a cooler facility (7) adapted to cool equipment contained in the space;
a generator (8) adapted to generate electric power required for the equipment contained in the space;
an operation panel in disaster (6) that is used to operate equipment in emergency; and
a communication information room (5) provided with equipment for communicating with the outside;
**characterized by** further comprising
a movable heat-removing system (10) including a mobile facility for alternative heat-exchanging (11) and a power-source vehicle (12) for the mobile facility for alternative heat-exchanging, the mobile facility for alternative heat-exchanging (11) being adapted to remove heat of cooling water in the reactor building (50) from an outside of the reactor building, and the power-source vehicle (12) being adapted to supply electric power to the mobile facility for alternative heat-exchanging (11);
a portable pump (13) being adapted to supply cooling water to the inside of the reactor building (50) from the outside of the reactor building;
a power-source vehicle (14) being adapted to supply electric power to equipment in the reactor building from the outside of the reactor building;
a battery (15) being adapted to supply operation power to the generator (8) installed in the safety facility;
a portable temporary power-source (16) capable of being moved to and installed at a required location; and
an emergency water-source (3) being adapted to supply water to the reactor building (50).

2. The safety facility according to claim 1,
wherein a building in the safety facility (1) is isolated by blocking communicating sections from the outside other than the safety facility and by insulating the safety facility from an outside environment.

3. A nuclear power plant comprising:
a reactor building (50), and
the safety facility of a nuclear power plant according to any one of claims 1 to 2,
wherein the reactor building (50) and the safety facility (1) are separated from each other at a predetermined distance.

4. The nuclear power plant according to claim 3,
wherein the safety facility (1) is disposed at a site above a ground level on which the reactor building (50) is disposed.

5. The nuclear power plant according to any one of claims 3 to 4,
wherein the safety facility (1) is buried in the ground below the ground level on which the reactor building (50) is disposed.

6. The nuclear power plant according to any one of claims 3 to 5,
wherein the safety facility (1) is disposed in the reactor building (50).

## Patentansprüche

1. Sicherheitseinrichtung (1) für ein Kernkraftwerk, die aufweist:
eine katastrophenresistente Wand (2); und
einen Raum, der von der katastrophenresistenten Wand (2) umgeben ist, wobei der Raum zumindest enthält:
eine Wasserzufuhrpumpe (4), die ausgebildet ist, Wasser in ein Inneres eines Reaktorgebäudes (50) einzuspeisen, das einen Reaktordruckbehälter (51) und einen primären Sicherheitsbehälter (52) enthält, wobei in dem Reaktordruckbehälter (51) ein Reaktorkern aufgenommen ist und der Druck in dem Reaktordruckbehälter konstant gehalten wird, und der primäre Sicherheitsbehälter (52) den Reaktordruckbehälter (51) enthält;
eine Kühleinrichtung (7), die ausgebildet ist, in dem Raum vorhandene Anlagen zu kühlen;
einen Generator (8), der ausgebildet ist, eine Energie zu erzeugen, die von den in dem Raum vorhandenen Anlagen benötigt wird;
eine Havarie-Bedienkonsole (6), die zum Betreiben von Anlagen im Notfall verwendet wird; und
einen Kommunikationsinformationsraum (5), der mit Anlagen zur Kommunikation mit der Außenwelt ausgestattet ist;
**dadurch gekennzeichnet, dass** die Sicherheitseinrichtung ferner aufweist:
ein fahrbares Wärmeabfuhrsystem (10), das eine mobile Einrichtung für einen alternativen Wärmeaustausch (11) und ein Stromversorgungs-Fahrzeug (12) für die mobile Einrichtung zum alternativen Wärmeaustausch umfasst, wobei die mobile Einrichtung zum alternativen Wärmeaustausch (11) ausgebildet ist, Wärme aus dem Kühlwasser im Reaktorgebäude (50) von außerhalb des Reaktorgebäudes abzuleiten, und das Stromversorgungsfahrzeug (12) ausgebildet ist, die mobile Einrichtung mit elektrischer Energie zum alternativen Wärmeaustausch (11) zu versorgen;
eine tragbare Pumpe (13), die ausgebildet ist, von außerhalb des Reaktorgebäudes Kühlwasser in das Innere des Reaktorgebäudes (50) einzuspeisen;
ein Stromversorgungs-Fahrzeug (14), das ausgebildet ist, die Anlagen in dem Reaktorgebäude von außerhalb des Reaktorgebäudes mit elektrischem Strom zu versorgen;
eine Batterie (15), die ausgebildet ist, dem in der Sicherheitseinrichtung installierten Generator (8) Betriebsstrom zuzuführen;
eine tragbare Übergangsstromquelle (16), die nach Bedarf zu einer Position bewegt und dort installiert werden kann; und
eine Notwasserquelle (3), die ausgebildet ist, das Reaktorgebäude (50) mit Wasser zu versorgen.

2. Sicherheitseinrichtung nach Anspruch 1,
wobei ein Gebäude in der Sicherheitseinrichtung (1) isoliert ist, indem Kommunikationssektionen von einem von der Sicherheitseinrichtung verschiedenen Außenbereich blockiert werden und die Sicherheitseinrichtung von einer Außenumgebung isoliert wird.

3. Kernkraftwerk das aufweist:
ein Reaktorgebäude (50) und
die Sicherheitseinrichtung eines Kernkraftwerks nach einem der Ansprüche 1 bis 2,
wobei das Reaktorgebäude (50) und die Sicherheitseinrichtung (1) durch einen vorgegebenen Abstand voneinander getrennt sind.

4. Kernkraftwerk nach Anspruch 3,
wobei sich die Sicherheitseinrichtung (1) an einem Standort oberhalb eines Geländeniveaus befindet, auf dem sich das Reaktorgebäude (50) befindet.

5. Kernkraftwerk nach einem der Ansprüche 3 bis 4,
wobei sich die Sicherheitseinrichtung (1) in dem Boden unterhalb des Geländeniveaus befindet, auf dem sich das Reaktorgebäude (50) befindet.

6. Kernkraftwerk nach einem der Ansprüche 3 bis 5,
wobei sich die Sicherheitseinrichtung (1) in dem Reaktorgebäude (50) befindet.

## Revendications

1. Installation de sécurité (1) pour une centrale nucléaire comprenant :
une paroi de protection contre les dangers (2) ; et
un espace entouré par la paroi de protection contre les dangers (2), l'espace contenant au moins :
une pompe de déversement d'eau (4) adaptée pour alimenter en eau l'intérieur d'un bâtiment de réacteur (50) comprenant un caisson de réacteur (51) et une enveloppe de confinement primaire (52), le caisson de réacteur (51) stockant un coeur de réacteur et maintenant constante une pression dans le caisson de réacteur, et l'enveloppe de confinement primaire (52) comprenant le caisson de réacteur (51) ;
une installation de refroidissement (7) adaptée pour refroidir l'équipement contenu dans l'espace ;
un générateur (8) adapté pour générer de l'énergie électrique requise pour l'équipement contenu dans l'espace ;
un panneau de fonctionnement de sinistre (6) qui est utilisé pour faire fonctionner un équipement en urgence ; et
une salle d'informations de communication (5) dotée d'un équipement pour communiquer avec l'extérieur ;
**caractérisée en ce qu'**elle comprend en outre :
un système mobile d'élimination de chaleur (10) comprenant une installation mobile pour un échange de chaleur alternatif (11) et un véhicule de source d'énergie (12) pour l'installation mobile pour un échange de chaleur alternatif, l'installation mobile pour un échange de chaleur alternatif (11) étant adaptée pour éliminer la chaleur de l'eau de refroidissement dans le bâtiment de réacteur (50) depuis l'extérieur du bâtiment de réacteur, et le véhicule de source d'énergie (12) étant adapté pour alimenter en énergie électrique l'installation mobile pour un échange de chaleur alternatif (11) ;
une pompe portable (13) étant adaptée pour alimenter en eau froide l'intérieur du bâtiment de réacteur (50) depuis l'extérieur du bâtiment de réacteur ;
un véhicule de source d'énergie (14) étant adapté pour alimenter en énergie électrique l'équipement dans le bâtiment de réacteur depuis l'extérieur du bâtiment de réacteur ;
une pile (15) étant adaptée pour alimenter en énergie de fonctionnement le générateur (8) installé dans l'installation de sécurité ;
une source d'énergie temporaire portable (16) pouvant être déplacée vers un emplacement requis et installée à un emplacement requis ; et
une source d'eau de secours (3) étant adaptée pour alimenter en eau le bâtiment de réacteur (50).

2. Installation de sécurité selon la revendication 1,
dans laquelle un bâtiment dans l'installation de sécurité (1) est isolé en bloquant des sections communicantes de l'extérieur autre que l'installation de sécurité et en isolant l'installation de sécurité d'un environnement extérieur.

3. Centrale nucléaire comprenant :
un bâtiment de réacteur (50), et
l'installation de sécurité d'une centrale nucléaire selon l'une quelconque des revendications 1 et 2,
dans laquelle le bâtiment de réacteur (50) et l'installation de sécurité (1) sont séparés l'un de l'autre selon une distance prédéterminée.

4. Centrale nucléaire selon la revendication 3,
dans laquelle l'installation de sécurité (1) est disposée sur un site au-dessus du niveau du sol sur lequel le bâtiment de réacteur (50) est disposé.

5. Centrale nucléaire selon l'une quelconque des revendications 3 et 4,
dans laquelle l'installation de sécurité (1) est enterrée dans le sol en dessous du niveau du sol sur lequel le bâtiment de réacteur (50) est disposé.

6. Centrale nucléaire selon l'une quelconque des revendications 3 à 5,
dans laquelle l'installation de sécurité (1) est disposée dans le bâtiment de réacteur (50).
